# EUROPEAN PATENT APPLICATION

(11) **EP 2 922 059 A1**
(43) Date of publication of application: **23.09.2015**
(21) Application number: 14305380.9
(22) Date of filing: 18.03.2014
(51) Int. Cl.: G11B 27/031, G11B 27/30, G11B 27/36

(54) **Method and apparatus for validating integrity of a group of files**

(71) Applicant: Thomson Licensing, 92130 Issy-les-Moulineaux (FR)
(72) Inventor: Arrighetti, Walter, 30625 Hannover (DE)
(74) Representative: Schmidt-Uhlig, Thomas

(57) **Abstract**

A method for validating integrity of a group of files and an apparatus (20) configured to perform the method are described. The apparatus (20) comprises a data retrieving unit (21) for retrieving (10) metadata associated to the files of the group of files. A data analyzer (22) analyzes (11) the retrieved metadata for consistency within the group of files. In case an inconsistency of the metadata within the group of files is detected, an action unit (23) performs (12) an action, e.g. by notifying a user or automatically correcting a detected inconsistency.

## Description

### FIELD OF THE INVENTION

The invention relates to a method and an apparatus for validating the integrity of a group of files, and more specifically to a method and an apparatus for validating the integrity of multimedia files used in file-based workflows.

### BACKGROUND OF THE INVENTION

During content production and processing multimedia files, e.g. video frames, are usually checked visually with regard to their quality, either fully manually or partially automatized. This visual quality control requires a time for inspection in the same or a slightly lower order of magnitude as the playback time of actual multimedia content, e.g. the video footage. Nonetheless, this today still is the best approach for ensuring the quality of the audio/video content. In many content processing workflows this step cannot be avoided, partly because of legal aspects. In other cases this step is unnecessary or less important, especially when the asset is completely file-based and is subject to automatized treatments. This is especially the case for applications that process the multimedia content real-time or as quickly as possible, e.g. during rendering operations. However, problems arise in file-based workflows, especially for file-per-frame video sequences, when frames are missing in the sequence or frame mismatches occur. Another source of problems are errors in the file formats or the imaging characteristics.

### SUMMARY OF THE INVENTION

It is an object of the present invention to propose a solution for validating the integrity of a group of files, which is capable of handling inconsistencies within the group of files.

According to the invention, a method for validating an integrity of a group of files comprises:
- retrieving metadata associated to the files of the group of files;
- analyzing the retrieved metadata for consistency within the group of files; and
- performing an action in case an inconsistency of the metadata within the group of files is detected.

Accordingly, an apparatus configured to validate an integrity of a group of files comprises:
- a data retrieving unit configured to retrieve metadata associated to the files of the group of files;
- a data analyzer configured to analyze the retrieved metadata for consistency within the group of files; and
- an action unit configured to perform an action in case an inconsistency of the metadata within the group of files is detected.

Also, a computer readable storage medium has stored therein instructions enabling validating an integrity of a group of files, which when executed by a computer, cause the computer to:
- retrieve metadata associated to the files of the group of files;
- analyze the retrieved metadata for consistency within the group of files; and
- perform an action in case an inconsistency of the metadata within the group of files is detected.

In order to validate the integrity of a group of files, e.g. of a frame-per-file video sequence, main characteristics of file formats are reviewed. Analysis of such main characteristics allows to quickly find problematic issues in the group of files, which are, for example, typical of file-based workflows. The proposed solution is preferably implemented as an application that analyses some of the available metadata, e.g. the file-format metadata stored in the header, as well as the files' naming convention and their internal folder substructures. In particular the application checks that those metadata and conventions are consistent according to the employed file-delivery, -distribution and -archival standards. In case of frame-per-file sequences, the internal consistency is advantageously checked at single-file level. As generally only a few kilobytes need be read from single files, the metadata consistency check is very quick and can usually validate the consistency of files and file system structures more efficiently than other systems.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: schematically illustrates a method according to the invention for validating the integrity of a group of files;
- Fig. 2: schematically depicts an apparatus configured to perform a method according to the invention; and
- Fig. 3: shows a screenshot of a software tool implementing the method according to the invention.

### DETAILED DESCRIPTION OF PREFERED EMBODIMENTS

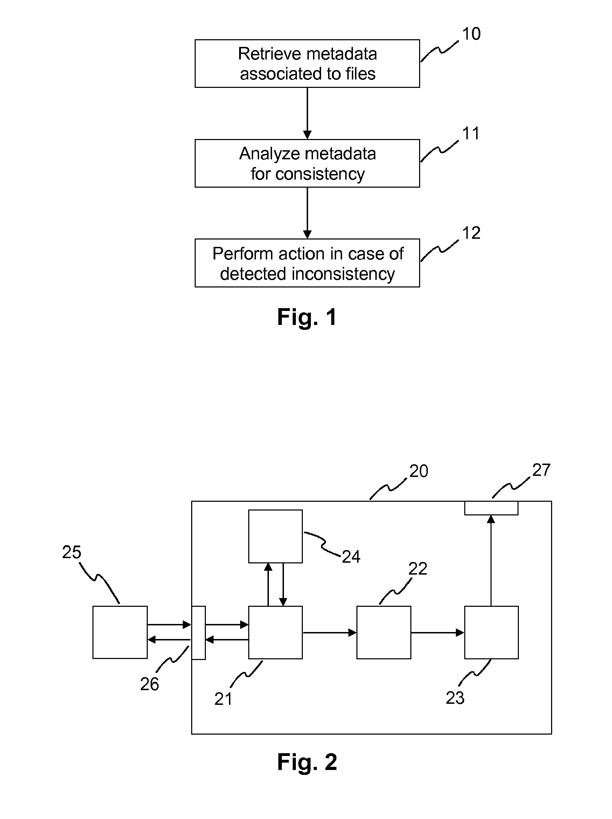

A method according to the invention for validating an integrity of a group of files is schematically illustrated in Fig. 1. After retrieving 10 metadata associated to the files of the group of files, the retrieved metadata are analyzed 11 for consistency within the group of files. In case an inconsistency of the metadata within the group of files is detected, an appropriate action is performed 12, e.g. by notifying a user or automatically correcting a detected inconsistency.

Fig. 2 depicts an apparatus 20 configured to perform a method according to the invention. The apparatus 20 comprises a data retrieving unit 21 for retrieving 10 metadata associated to the files of the group of files. A data analyzer 22 analyzes 11 the retrieved metadata for consistency within the group of files. In case an inconsistency of the metadata within the group of files is detected, an action unit 23 performs 12 an action, e.g. by notifying a user via a user interface 27 or by automatically correcting a detected inconsistency. The metadata are preferably retrieved from an internal storage unit 24 of the apparatus 20 or an external storage unit 25 connected to an input 26 of the apparatus 20. Of course, the various units 21, 22, 23 of the apparatus 20 may likewise be partially or fully combined into a single unit. Also, they are either implemented as dedicated hardware or as software running on a processor.

In the following the invention shall be explained in more detail with reference to video footage provided as a file-per-frame sequence. Of course, the proposed solution can easily be extended to any type multimedia asset, not necessarily using a file-per-frame or a file system naming convention. For example, the solution is likewise applicable to documents or eBooks or even executable/binary files. It is sufficient that the file has a header or a pre-defined metadata structure that can be parsed.

A general idea of the proposed solution is that the consistencies of files of a group of files are checked by an application or an apparatus to prevent many sources of corruption or invalidation of media content. Exemplary consistencies that can be checked will be explained below. The proposed solution can be fully automatized and operates rather quickly even on large groups of files, since it involves just reading and comparing file metadata that are stored in a few kilobytes within each multimedia file.

Uncompressed video footage, but also video that is compressed using an intra-frame compression scheme, is traditionally stored as a frame sequence, particularly during the post-production and finishing phases. This means that each subsequent frame of a time-continuous video clip is stored as a single file. The resulting group of files is generally called a "frame-per-file" sequence. All the files belonging to the same logical clip share the following file system metadata:
- file path; all files of a frame-per-file sequence reside in the same folder, e.g. /path/to/clip;
- base filename; all files of a frame-per-file sequence have the same base filename, e.g. basename-, generally succeeded by consecutive numbers;
- file extension; all files of a frame-per-file sequence have the same file extension, e.g..dpx (DPX: Digital Picture Exchange), which logically mandates the file-type encoding the frame.

For example, a video clip consisting of 2000 frames may be stored as the following file sequence:
- /path/to/clip/basename-289368.dpx,
- /path/to/clip/basename-289369.dpx,
- /path/to/clip/basename-289370.dpx,
- ..........
- /path/to/clip/basename-300367.dpx,

It is to be noted that the starting file number is irrelevant for the purposes of the present invention.

In other cases the files are not necessarily distributed in frame sequences, but may need to hold a consistent naming convention and/or file system structure. Also the naming convention and the file system structure are part of the content metadata. Examples include, but are not limited to:
- footage as produced by professional cinema cameras to original SSD (SSD: Solid State Disk) or HDD (HDD: Hard Disk Drive) based storage;
- footage to be post-processed across several different facilities, e.g. visual effects houses;
- footage that is sent to broadcasters and integrators for video on demand and/or Internet streaming purposes;
- long-term and mid-term archival;
- Digital Cinema Distribution Masters (DCDMs) and Digital Cinema Packages (DCPs) up to final theatrical distribution.

Programs that run on file sequences, especially for rendering or play-out purposes, where speed is more important than accuracy, do not read the metadata of each file in the sequence. These programs simply assume that all the files conform to the same metadata as the first file or frame. However, what often happens, especially when footage undergoes several different operations by several different agents, maybe even from different facilities or locations, is that only a part of the footage is manipulated, sometimes incorrectly. For example, a frame sequence starts at file/frame #112345 and ends at frame #232420. An intermediate edit changed 158 frames from #123030 to #123187, potentially adding, to give an example, a fourth transparency channel to an otherwise 3-channel sequence. A program that just plays or renders out the whole video sequence will not check all the metadata, which might result in "frame drops" or even crashes of subsequent applications when frame #123030 is reached. Likewise, in the case of a long-term archival application for offline storage or masters' treatment, the "invalid" subsequence might as well as be backed up unnoticed - only to discover later that it is invalid.

According to the invention, however, the internal metadata consistency of such file sequences or groups of files is checked. Exemplary checks that are performed include:
- Checking that in a frame sequence all the frames are present;
- Especially for non-compressed footage, checking that all the frames are stored in files of the same or roughly the same size;
- Checking that all the files in the group of files share at least the same active metadata, like resolution, bit depth, number of color-space channels, creator application, etc.

The above simple checks across the group of files are able to cope with a variety of issues that may occur during production. For example, programs or operations that may have, by either mistake or misuse, altered just a portion of the frames in a sequence, may have likely also changed some of their metadata, e.g. the fields dedicated to the creation date and/or creation applications. Furthermore, such programs or operations, but also file-level data corruption, may alter the effective file size of some frames, whereas uncompressed frames should all be represented by files with the same size. In addition, corruption in the files may manifest as corruption in the file headers. Therefore, file corruption may be revealed by an analysis of the file header.

In the following an exemplary implementation of the proposed solution, in the form of a software tool, shall be described in some more detail. The tool is able to work on a variety of video file formats:
- REDCODE video assets; the video assets are provided as single clips with an .R3D file extension. This format is the "raw" video as generated by RED Digital Cinema Company cameras. Analyzed metadata includes two different flavors of TimeCodes.
- ARRIRAW video assets; the video assets are provided as file-per-frame sequences with an .ari file extension. This format is the "raw" video as generated by ARRI's digital cameras. Analyzed metadata includes seven different flavors of TimeCodes and all the in-camera color-correction parameters, such as white balance, Color LUTs

(LUT: Look-Up Tables), CDLs (CDL: Color Decision List), etc., as well as camera roll and tilt.
- SMPTE and Kodak DPX frame sequences; the video assets are provided as file-per-frame sequences with a .dpx file extension. Analyzed metadata includes full imaging metadata as well as broadcast TimeCode and film-based KeyKode.
- TIFF frame sequences; the video assets are provided as file-per-frame sequences with a .tif or .tiff file extensions. Metadata may include all the metadata stated in the above cases, plus several hundreds of others, as specified by the Adobe TIFF Specifications.
- Kodak Cineon frame sequences; the video assets are provided as file-per-frame sequences with a .cin file extension. Analyzed metadata includes full printing density information and film KeyKode.

The tool can easily be extended to other formats, e.g. QuickTime- and MXF- wrapped video clips (MXF: Material exchange Format) with analysis of the containers' metadata, as well as OpenEXR and DNG / CinemaDNG frame sequences (EXR: Extended Dynamic Range; DNG: Digital Negative).

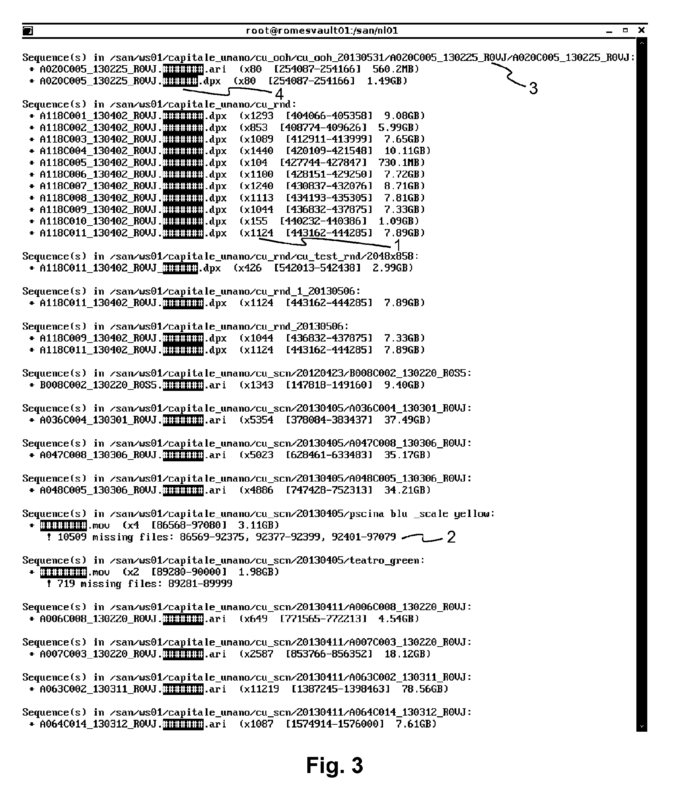

Fig. 3 shows a sample run of the above tool, where a sequence of original footage, stored in DPX files, is checked, shot per shot, revealing a sequence count 1 and a few "broken" sequences 2 where some frames are missing. Also visible are file paths 3 and the part 4 of the file sequences reserved to the frame numbers. As can be seen, the tool provides a user warning about such missing frame sequences. The user then has the possibility to react accordingly, e.g. by adding the missing frame sequences to the file paths.

While in the above screenshot only missing frame sequences are shown, the tool also checks the metadata of all the files in the sequence, comparing it with the metadata of the first frame. Applications that have changed the encoding/channels in the above subsequence may also have added a different timestamp, or altered some metadata, e.g. the textual indication of the file's creator, or simply the number of channels in the picture. Even more easy to check, especially for uncompressed frame sequences where all the frames have the same byte size, such applications may have altered the files' size.

## Claims

1. A method for validating an integrity of a group of files, the method **comprising:**
- retrieving (10) metadata associated to the files of the group of files;
- analyzing (11) the retrieved metadata for consistency within the group of files; and
- performing (12) an action in case an inconsistency of the metadata within the group of files is detected.

2. The method according to claim 1, **wherein** the action is at least one of notifying a user about the detected inconsistency or automatically correcting the detected inconsistency.

3. The method according to claim 1 or 2, **wherein** the group of files is a frame-per-file sequence.

4. The method according to claim 3, **wherein** the analyzed metadata comprises one or more of time codes, resolution, bit depth, number of color-space channels, and camera parameters.

5. The method according to one of the preceding claims, **wherein** the analyzed metadata comprises one or more of file name, files size, creation date, creating application, and file header.

6. The method according to claim 4 or 5, **wherein** analyzing (11) the retrieved metadata for consistency within the group of files comprises determining unexpected differences between the metadata of individual files of the group of files.

7. The method according to one of the preceding claims, **wherein** analyzing (11) the retrieved metadata for consistency within the group of files comprises determining one or more missing files of the group of files.

8. An apparatus (20) configured to validate an integrity of a group of files, the apparatus (20) **comprising:**
- a data retrieving unit (21) configured to retrieve (10) metadata associated to the files of the group of files;
- a data analyzer (22) configured to analyze (11) the retrieved metadata for consistency within the group of files; and
- an action unit (23) configured to perform (12) an action in case an inconsistency of the metadata within the group of files is detected.

9. A computer readable storage medium having stored therein instructions enabling validating an integrity of a group of files, which when executed by a computer, cause the computer to:
- retrieve (10) metadata associated to the files of the group of files;
- analyze (11) the retrieved metadata for consistency within the group of files; and
- perform (12) an action in case an inconsistency of the metadata within the group of files is detected.
